# EUROPEAN PATENT APPLICATION

(11) **EP 1 524 637 A1**
(43) Date of publication of application: **20.04.2005**
(21) Application number: 03425667.7
(22) Date of filing: 15.10.2003
(51) Int. Cl.: G08B 25/08, G08B 25/10

(54) **System for acquiring and surveying data following catastrophic events, with the aim of facilitating eventual aid or intervention**

(71) Applicant: Tardito Costruzioni e Impianti S.r.l., 00131 Roma (IT); EC - European Commission, 1049 Brussels (BE); Zenon S.A., 153 54 Athens (GR); Ideasis Ltd., 34100 Halkida (GR); COMMISSARIAT A L'ENERGIE ATOMIQUE, 75752 Paris Cédex 15 (FR); Industrial Systems Institute, 26500 Patras (GR); Earthquake Planning and Protection Organisation ( E.P.P.O.), 15451 Athens (GR); Universita' Della Calabria, 87036 Arcavata di Rende (CS) (IT)
(72) Inventor: Katevas, Nikos, 34100 Halkida (GR); Andritsos, Fivos, 1049 Brussels (BE); Theofili, Chara, Vrilissia 15235, Athens (GR); Chrysagis, Kostas, 15354 Athens (GR); Dandoulaki, Miranda, 15451 Athens (GR); Delprato, Uberto, 00131 Roma (IT); Eck, Laurent, 75015 Paris (FR); Efstathiou, Konstantinos, 26500 Rio Patras (GR); Karvelas, Efstratios, 15354 Athens (GR); Ferrucci, Fabrizio, 87036 Arcavata di Rende (CS) (IT); Kalivas, Grigorios, 26500 Rio Patras (GR); Karastergios, Georgios, 26500 Rio Patras (GR); Koubias, Stravros, 26500 Rio Patras (GR); Letelier, Laurent, 75015 Paris (FR); Moreau, Vincent, 75015 Paris (FR); Papadopoulos, Georgios, 26500 Rio Patras (GR); Pogas, Nikolaos, 26500 Rio Patras (GR); Thoma, Thekla, 15451 Athens (GR); Vakalis, Ioannis, 1049 Brussels (BE); Vasilakopoulou, Efrosini, 26500 Rio Patras (GR)
(74) Representative: Iannone, Carlo Luigi

(57) **Abstract**

A system for collecting and surveying data following accidental events and/or catastrophes, in particular to support eventual aid intervention, characterised in that it comprises a monitoring device (1) and a control station (2), said monitoring device (1) comprising at least one catastrophic event detecting device (4), at least one surveying device of surrounding environment (4 and 5), at least one memory unit (6), at least one transmission unit (8^{III}) of said data and or and/or locating information, a central processing unit (9) and electrical feeding means (10), characterised in that said monitoring device (1) only after said catastrophic event activates itself and than transmit the surveyed data and/or memorised to said control station (2), and said control station comprising at least one receiving unit of said transmitted data from said monitoring device (1).

## Description

This invention concerns a system for acquiring and surveying data following catastrophic events, with the scope of facilitating eventual aid or intervention.

More in detail, this invention concerns a system that is triggered by a specific catastrophic event, by detecting some predetermined parameters, and records data/information relative to the possible human presence in the neighbourhood, the surveyed data being transmitted at a later stage to the rescuers.

The present patent application is based upon an original concept by Nikos Katevas, Fivos Andritsos and Chara Theofili, and further developed, under the Consortium participated by the Applicants, with the co-operation of the other inventors.

Human life has always been at risk even inside its built environment (home, work etc) by natural or man-made disasters and other hazards. Earthquakes, avalanches, floods, building collapsed due to structural failures, explosions, war or terrorist actions are some examples.

The increase of the demographic concentration in the cities, makes the population even more vulnerable.

Usually, there are particular contingents to help people victim of the catastrophes. Those forces could be, for example, armed forces, firemen or voluntary assistants.

Said contingents have as primary scope that of saving people trapped following, for example, incidental collapses, and, at a second stage, recovering the bodies of the victims of the tragic event.

Even if the above mentioned operations continue for a lot of time, even many days, it is evident that the possibility of saving lives reduces drastically with time.

It would therefore be ideal for such contingents to know as early as possible, if there were human life during the catastrophe a placerather than another so that the rescue operations could be faster.

To date, the prime source of such information comes from the neighbours or persons that were at the disaster site but have escaped from the catastrophic event.

Search and rescue operations are actually based mainly on physical and canine search.

Existing electronic means to provide information on the location of trapped victims are limited to some equipment that enhance the human senses like geophones to detect voices or heartbeats, infrared thermal imaging to detect body heat and optical fibers for viewing through voids. Such equipment has had limited use mainly in confirming existing information on the location of trapped persons.

The present invention proposes a radically different approach to the problem: pre-installed monitoring devices, capable of understanding the occurrence of a given catastrophic event, record only the necessary information during the event and transmit it, after the event only to predetermined, authorised centers.

The monitoring devices proposed by the present invention can be installed anywhere, the only prerequisite being the provision of electrical mains power.

When there is no incumbent danger the privacy of the people living near the information capturingdevice is guaranteed..

It is specific subject matter of this invention a system to collect data and/or information for events and/or catastrophes, in particular to allow eventual aids, characterised in that it comprises a monitoring device and a control station, said monitoring device comprising at least one catastrophic event detecting device, at least one surveying device of surrounding environment, at least one memory unit, at least one transmission unit of said data and or and/or locating information, a central processing unit and electrical feeding means, characterised in that said monitoring device only after said catastrophic event activates itself and than transmit the surveyed data and/or memorised to said control station, and said control station comprising at least one receiving unit of said transmitted data from said monitoring device.

Always according to the invention, said monitoring device could comprise a data and/or information receiving unit and said control station could comprise a data transmission unit and could use the radio channel or the supply mains.

Preferably according to the invention, said monitoring device could send said data and/or locating information only after an identification procedure by said control station, which could comprise the following steps:
- transmission of an access request to get said data and/or locating information by an user by means of said control station;
- reception of said access request by said monitoring device;
- transmission of the identification code to said control station by said monitoring device;
- reception of said identification code by said control station;
- identification of said monitoring device by said control station;
- transmission of the identification information to said monitoring device by said control station;
- starting of the transmission of said data and/or locating information;
- end transmission data message transmission.

Still according to the invention, said monitoring device, after the end of data transmission, could function as a radio link among said control station and one or more monitoring device and receiving said data and/or locating information from said further one or more monitoring device'and forwarding them by transmission to said control station.

Always according to the invention, said monitoring device could transmit said data and/or locating information to said control station by a plurality of control devices functioning as radio link.

Still according to the invention, said monitoring device could transmit said data and/or locating information to said control station by means of telephone system.

Further according to the invention, said monitoring device could transmit said data and/or locating information to said control station by means of a cellular phone functioning as a radio link.

Still according to the invention, said control station could comprise an interface for communicating received data to a user, as a monitor or a printer.

Always according to the present invention, said at least one surveying device of the surrounding environment is a videocamera, that could comprise an electronic device for images acquisition.

Preferably according to the invention, said videocamera could comprise at least one infra red lighting device for images acquisition without light.

Still according to the invention, said videocamera could comprise at least one video processing unit for images compression.

Further according to the invention, said at least one surveying device of surrounding environment could comprise a microphone and an audio processing unit and a compression unit.

Still according to the invention, after the end of data transmission, said monitoring device could collect audio and video information of surrounding environment and send them in real time to said control station for detecting possible human presence alive.

Always according to the invention, said monitoring device could activate said at least one surveying information device of surrounding environment for variation threshold crossing of at least one parameter by said detector device.

Preferably according to the invention, said monitoring device could activate said at least one surveying information device of surrounding environment for crossing of a plurality of variation thresholds of corresponding parameters detected by said detecting device to avoid false activation.

Still according to the invention, said at least one detecting device comprises a device to detect radiations as a Geiger counter, and/or a gas and/or chemical toxic and/or polluting substances sensor.

Always according to the invention, said at least one detecting device could comprise a device to detect the structure collapses as a videocamera.

Preferably according to the invention, said detecting device to detect the structures collapse could comprise at least one processing unit for extracting the structural parameters from video images.

Always according to the invention, said video images structural parameters could be distances among points, lengths of lines and angles among said lines.

Still according to the invention, said variation thresholds of said structural parameters could be per cent variations of said distances among points, said lengths of lines and corners among said lines and/or their mutual relations.

Always according to the invention, said monitoring device could activate said at least one surveying information device of surrounding environment by means of an activation procedure, for avoiding false activation, which could comprise the following steps:
a. data acquisition from the surrounding environment by the surveying device;
b. extraction of calculation parameters by said central processing unit;
c. processing of said parameters;
d. extraction of said parameters variations and of related mutual relations;
e. comparison of said parameters variations with said maximum predetermined variation threshold;
if is crossed at least one maximum variation threshold of said parameters, then the monitoring device carries out the following steps:
e.1. activation counter increasing by one;
if the activation counter is lower than a predetermined value then the monitoring device comes back to step a, else it is carried out the following step:
e.1.1. it is activated the surveying device of surrounding environment;
if the variation threshold is not crossed, then the device carries out the following step:
e.2. the activation counter is set at zero;
e.2.1. the loop starts again at step a.

Preferably according to the invention, said activation procedure to avoid false activation, could comprise the following steps,:
aᵥ. images acquisition by the videocamera;
bᵥ. extraction of structural parameters by means of a video processing unit by detecting the luminosity gradients of the surrounding environment and by the selection of the structural set parameters such as points and/or lines and/or angles among lines;
c_{V}. tracking of said structural parameters on the video image;
dᵥ. extraction of said parameters variations;
e_{V}. comparison of said parameters variations with maximum predetermined variation threshold;
e_{V}.1. activation counter increasing by one;
if the activation counter is lower than a predetermined value then the monitoring device comes back to step a, else it is carried out the following step:
eᵥ.1.1. activation of the videocamera to survey images of surrounding environment for surveying information , in particular about the possible danger for humans;
if the variation threshold is not crossed, then the device carries out the following step:
eV.2. the activation counter is set at zero;
eV.2.1. the loop starts again at step a.

Further according to the invention, said monitoring device could comprise a communication gate to insert identification data of said monitoring device.

Still according to the invention, said communication gate could enable only an input data flow, remaining inhibited after the first use.

Preferably according to the invention, said system could comprise a procedure for inserting said identification data of said monitoring device comprising the following steps:
A. connecting a programming device to said monitoring device through said communication gate;
B. connecting of electrical feed;
C. installing said monitoring device;
D. extraction of parameters by the monitoring device;
E. selection of said parameters by the installation technician.
F. selection of relations among said parameters by the installation technician.
G. selection of the variation thresholds of said parameters by the installation technician, and inserting locating information;
H. selection of a time interval after which the crossings of said parameters are considered occurred;
I. activation of said monitoring device;
L. interruption of the connection between said communicating gate of said monitoring device and said programming device.

Always according to the invention, said locating information could regard the environment in which the monitoring device is installed.

Still according to the invention, said electric feeding means could comprise the supply mains.

Preferably according to the invention, said electric feeding means could comprise a buffer battery and the related charger and an electronic control unit.

Still according to the invention, said electric feeding means could comprise solar collector.

Further according to the invention, said monitoring device could be contained in an shock resistant and/or fireproof and/or watertight packaging.

This invention will be now described, by way of explanation and not by way of limitation, according to its preferred embodiments, by particularly referring to the attached drawings, in which:
figure 1 shows a block diagram of the principal operation steps of a preferred embodiment of the present invention;
figure 2 shows a first connecting mode between a control station and a plurality of monitoring devices;
figure 3 shows a second connecting mode between a control station and a plurality of monitoring devices;
figure 4 shows a diagram of the blocks which constitutes the monitoring device;
figure 5 shows two images of how the monitoring device extracts the parameters from the environment in which it is installed;
figure 6 shows the flow chart of installation steps of monitoring device;
figure 7 shows the flow chart of the activation procedure of the monitoring device;

To understand better the present invention it is described in the following the functioning ways of the preferred embodiment of the system adapted to detect the collapses of private structures such as offices or houses, being valid equivalent ways for different uses and/or embodiments as for example to detect nuclear radiation escapes, or toxic and/or polluting substances or the collapse of public structures.

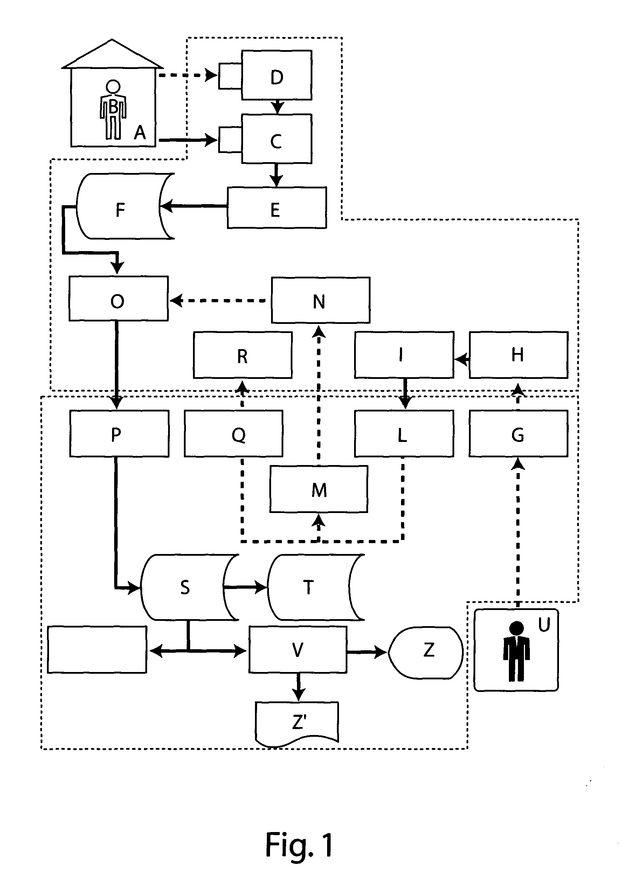

Referring to figure 1 it is shown a diagram of the operations to the preferred embodiment of the system according to the invention, that sketches out the information flux of the system according to the present invention outlining the fundamental functioning, as will be analysed in the follow.

In particular, the functions carried out by a monitoring device 1, defined in the upper part of the figure, are distinguished respect to the functions carried out by a control station 2. More in detail, it is considered a building A, or any other place to monitoring, where there can be some people B and where is installed the monitoring device 1. This one comprises a sensor C of several kinds. In the following example'it is considered an optical sensor.

Said optical sensor C, that can be a video shooting device, as a videocamera, is activated by an activation device D. In particular, said activation device D, enables the sapling of an image by the sensor C, during predetermined time intervals. In this case, an image of the building A under monitoring is acquired. The digital information obtained from the sensor C is sent to a processing system E, programmed to extract and process suitable parameters of the image, as will be described in the follow. Said processing system E estimates if said parameters have had variations which crossed predetermined thresholds, to check dangerous situations, or, in this case, if the building A is collapsing or not. If any danger is detected the loop starts again with the following activation of the sensor C by the device D, else a memory unit starts to record the images of the sensor C to register the possible human presence in the area subject to the danger.

In the next step following the catastrophic event, the system provides data transmission stored in the memory unit F, to point out the possible human presence in particular damaged places to the reliefs.

Moreover, it is provided a system that allows both protecting the privacy, and avoiding the diffusion of reserved operating information. That is done by inhibiting the transmission function except if it is explicitly requested by a transmitter with the right code.

How above said is carried out in the following way. An user U through a control station in case portable, such as a computer... (not present in the figure), send a request in step G, that is received by the monitoring device 1, step H. This monitoring device 1, during step I, sends the identification code, that is received by the control station 2 during the step L. After that, there is the following identification of the monitoring device contacted in the step M, and after the dispatch of this identification, there is the self activation of the monitoring device 1 in step N before the step O of the data dispatch. After the data receiving, in step P, it is simultaneously confirmed the reception of the in step Q and, at the end of the transmission, the monitoring device 1 could pass to a changing state, step R, that will enable to get it ready for possible alternative functions, as will be explained in the follow.

After data reception, it is provided that they are stored, as illustrated in the step S, and that they are contemporary saved, step T, then processed, step V, and then available to the user, for example in a display or in a monitor Z or in paper by means of a printer Z'.

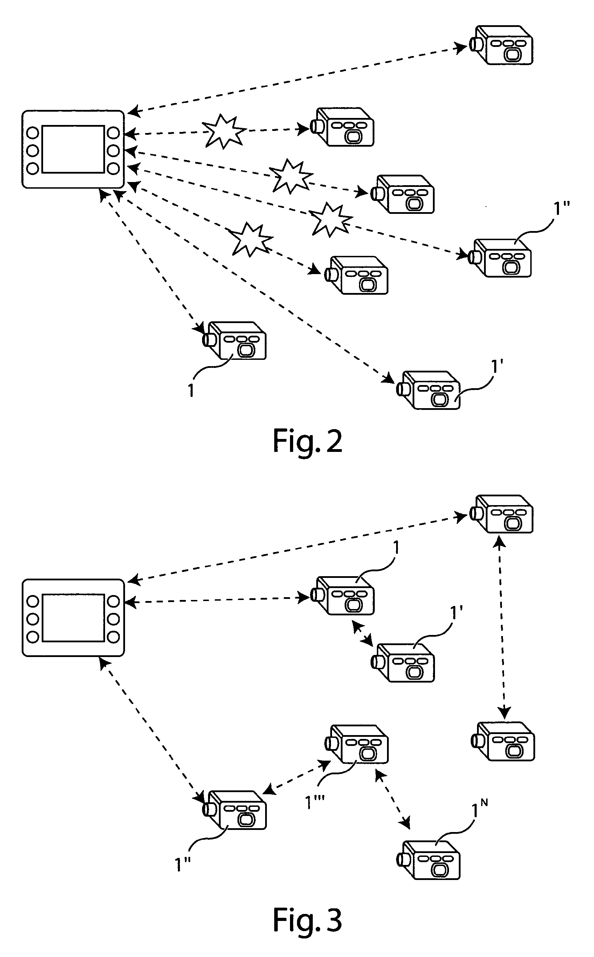

Referring to figures 2 and 3, some additional functions of the present invention are shown. In particular it is considered the case in which the monitoring device 1 has ended the transmission, or has ended the step O referring to figure 1. In this case, after the confirmation of data reception, step Q, the device 1 could pass to a different functioning state. In particular, in described embodiment, the system could function as a rice-transmitter becoming a radio link with other devices of the same kind. In figure 2, in fact, can be understood that the control station 2 is directly linked to the devices 1, 1^{I}, 1^{II}... while, in figure 3 the device 1 is functioning as in the step R, or it has ended data transmission and could take the radio link function with the devices between the control station 2 and, for example, the device 1^{I} which is in the transmission step O. it is possible that two devices 1^{II} and 1^{III} be in step R ( end of data transmission) and function as radio link each other to link the control station 2 to the device 1^{IV}. It is obvious that could be done, mutatis mutandis, eventual extensions of this multiple link.

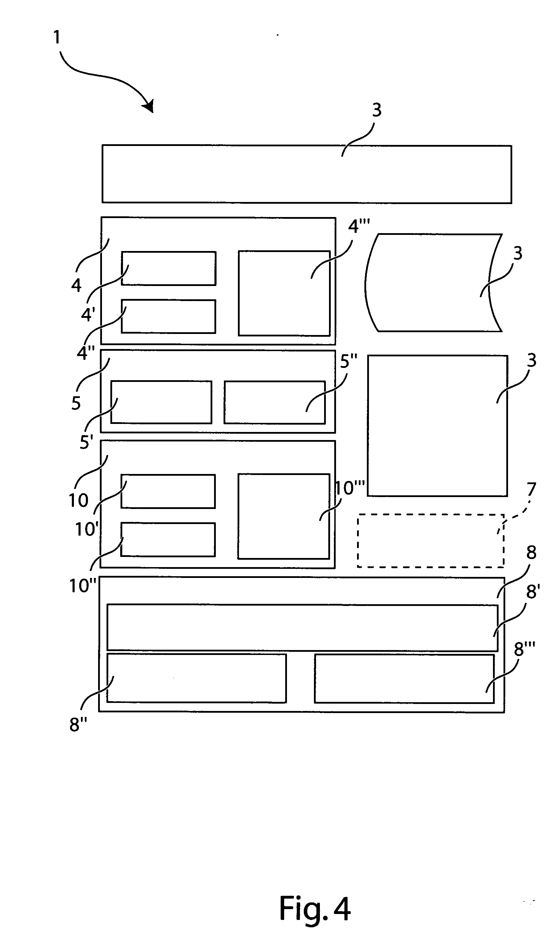

Referring to figure 4, it is described more detail the monitoring device 1. In particular, it possible examining the several units placed in the packaging 3. Said packaging 3 must be particularly resistant, or shock resistant, so that it can protect inner electronic devices in case of calamity.

The monitoring device 1 provides a surveying unit 4 which contains a sensor 4', some infra red leds 4" to lighting, and an image processing logic unit 4"'. The LEDs 4" light the environment to be controlled in the dark. In such way the sensor 4' can takes information during any time of the day independently from the lighting conditions.

Sensor 4' could be realised in many ways, to detect many kind of dangers. We consider in the embodiment described here only the case of an optical sensor, thus comprising a lens and a image digitalisation device, such as a CCD (Charge Coupled Device).

In addition to the surveying unit 4 it could be provided a audio surveying unit 5, comprising a microphone 5' and an audio processing unit 5".

The information taken by the units 4 and 5 are then stored, at least temporarily, in a memory unit 6.

The device 1 also provides a gate 7 to insert all the data, the addresses, the locating codes and the identification of the same monitoring device 1 for a possible catastrophe. That gate is used during installation of the monitoring device 1 and, if the device is applied in a public endeavour, after data insertion, said gate 7 is inhibited for ever, so that none can violate it, in order to protect the privacy of individuals.

The communicating unit 8 provides a control unit 8' appropriately programmed by a software, and the further receiving units 8" and transmission units 8^{III}, which, as described above, can transform the monitoring device 1 in a radio link to link other devices to the control station 2.

The system is controlled by a central unit 9, that activates the sensor, data transmission or data receiving, and surveys the operation of all the units of the devices of the same kind.

All the above described units are fed by a feeding unit 10, which comprises a rechargeable battery 10' by means of the supply mains, a charger device 10" and a control logic unit 10^{III}.

At this point of the description it is useful showing one of the ways to program the system for activating the monitoring device 1. In fact, always referring to figure 4, the surveying unit 4 is a video shooting then it is used for monitoring a possible structure collapse. Anyway, for obtaining the above described scope, it is necessary to preset_some reference parameters carrying out thresholds, which permit the activation of the device.

How above is obtained taking into consideration the parameters related to the event, in this case the structural ones, and valuing mutual variations of said parameters, respect to the threshold crossing.

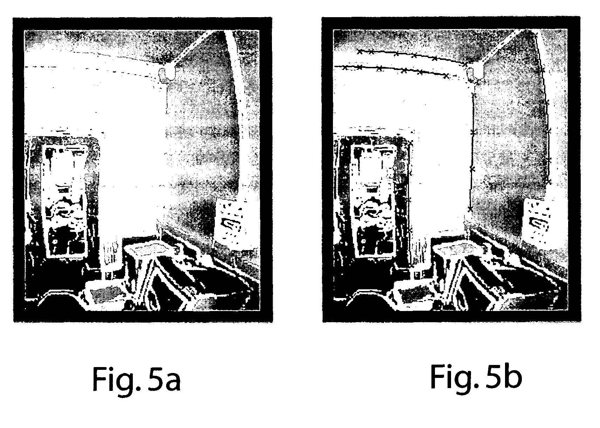

In figure 5a it is possible seeing a video image as taken by the monitoring device 1. Monitoring device 1 isolates on that image a set of points and lines by detecting the discontinuities of the lighting gradient, to obtain the parameters of the patterns and of the structures. Anyway, the obtained information comprise non-structural data, as the arrangement of the furniture. Thus it is provided the intervention of a technician to make a selection of useful and fixed points an lines, as a reference. After the end of the following steps, the monitoring device 1 can extract from each future video shooting the lines and the points of the figure 5b. Thus, after an activation, the device extracts said parameters and compares them with the parameters in its memory. If a certain number of said parameters (points and lines) are shifted for a predetermined percentage and/or if the angle among said lines have crossed a threshold, then the device considers those information as an incoming danger and starts the video shooting of the environment.

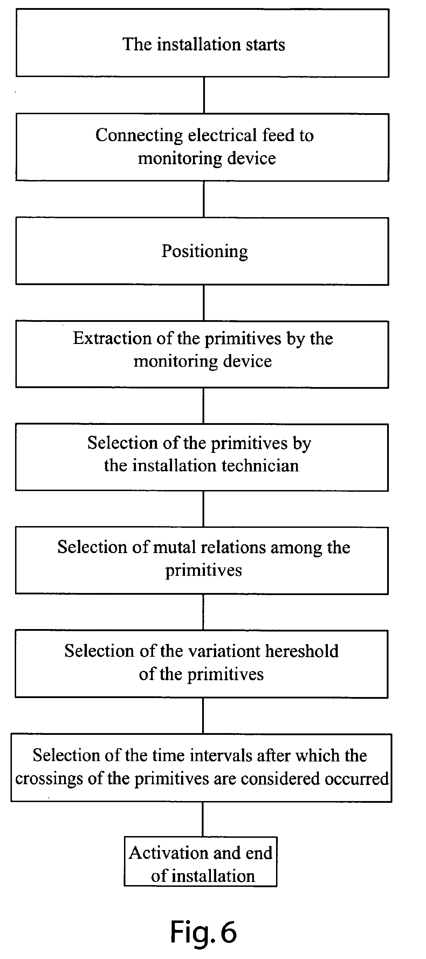

The installation mode of the monitoring device 1 comprises of the following steps, expressed in the flow chart of figure 6. In particular the steps are:
the installation starts;
connecting electrical feed to monitoring device 1;
positioning monitoring device 1 to cover an area as large as possible of the monitoring environment;
extraction of parameters by the monitoring device 1;
selection of structural characteristic parameters by the installation technician, from the extracted ones of monitoring device 1;
selection of relations among said parameters by the installation technician.
selection of the variation thresholds of said parameters by the installation technician;
selection of a time interval after which the crossings of said parameters are considered occurred;
activation and end of installation.

A comment should be worth the step in which the installation technician selects the primitives which are used by the system to carry out the comparisons. To avoid that when the monitoring device 1 is storing the images someone ambulating in the room covers, it is care of the said technician selecting a sufficient number of primitives and or a set of mutual relations for reducing the false alarms an avoiding accidental activation. Moreover it is provided a lapse of time, set by the above mentioned technician, which measures the measures the time that the variation parameter threshold is crossed, and after that time lapse the monitoring device 1 is activated.

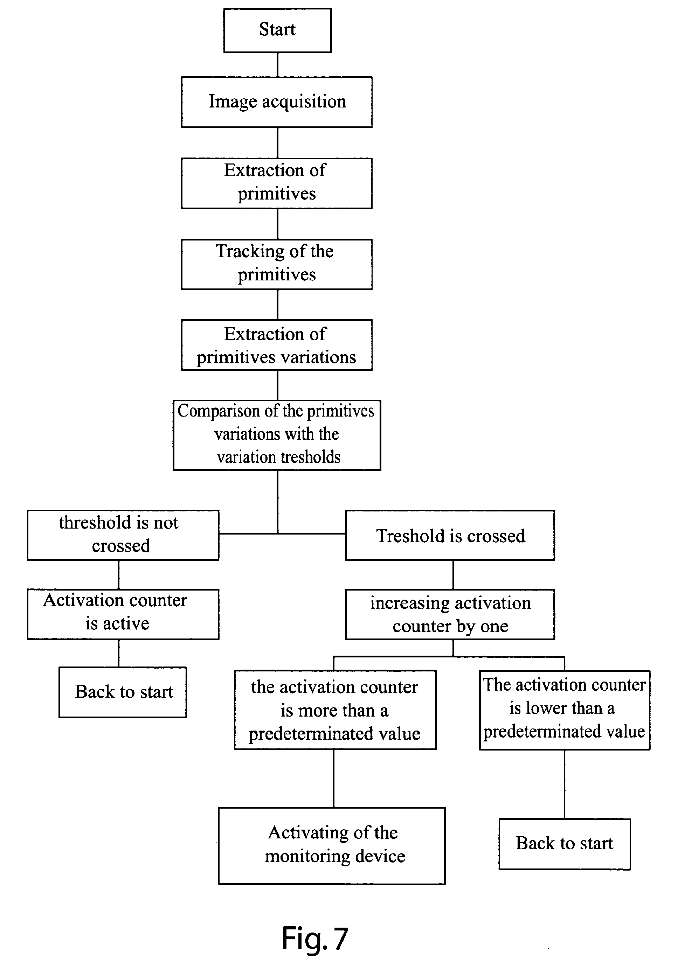

Referring to figure 7, it is possible seeing the activation process of the monitoring device 1 in a preferred embodiment. In particular the steps are the following:
- images acquisition;
- extraction of the primitives;
- tracking of the primitives;
- processing of the relations and among the primitives;
- comparison with variation threshold;
if the threshold is not crossed there are the following steps:
- setting to zero the activation counter, it stores in the memory how many parameter threshold are crossed;
- the system starts again the functioning loop;
else, if the threshold is crossed:
activation counter increasing by one;
if the activation counter is lower than a predetermined value, thus a sufficient number of parameters are not violated, for avoiding false activation, then:
the system starts again the functioning loop, acquiring the images;
if the counter has crossed the activation value, the monitoring device considers the existence of a danger and puts itself in activity passing to the subsequent steps.

As can be understood from the flow diagram described above, it is provided a counter, so that the monitoring device starts to function only for the crossing of a certain number of thresholds. We add that it allows to prevent false activation even in case of, for any reason, some parameters could not be detected, as for example in case of covered structural parameters.

As can be understood from the above description, the present invention shows remarkable advantages allowing the localisation of the people involved in catastrophes with high precision making the aid operations more rapid and effective.

A further version of the system provides also the possibility that the control station send by regular time intervals identification signals to said monitoring devices. If said monitoring devices have not detected any event, so that they not start to functioning, remaining in standby, they are not enabled to answer to said identification signals. Instead, if an event happens that has activated the monitoring device, this one answers with the normal procedure described above, transmitting the data. This allows to obtain an higher speed for collecting the information.

Moreover, it is possible enabling data transmission from the monitoring devices by supply mains, so allowing the a further version for the communication of detected events.

The system presents a remarkable strength, in fact it is provided both independent feed systems and system to avoid false activation.

This invention have been above described by way of illustration, but not by way of limitation according to its preferred embodiments and it should be understood that those skilled in the art can make other modifications and changes without departing from the scope of the invention as defined in the following claims.

## Claims

1. A system for surveying data and/or locating information because of events and/or catastrophes, in particular to simplify eventual aid intervention, **characterised in that** it comprises a monitoring device and a control station, said monitoring device comprising at least one catastrophic event detecting device, at least one surveying device of surrounding environment, at least one memory unit, at least one transmission unit of said data and or and/or locating information, a central processing unit and electrical feeding means, **characterised in that** said monitoring device only after said catastrophic event activates itself and than transmit the surveyed data and/or memorised to said control station, and said control station comprising at least one receiving unit of said transmitted data from said monitoring device.

2. A system according to claim 1, **characterised in that** said monitoring device comprises a data and/or locating information receiving unit.

3. A system according to anyone of the preceding claims, **characterised in that** said control station comprises a data transmission unit.

4. A system according to anyone of the preceding claims, **characterised in that** said transmission and/or receiving units are radio transmission and/or receiving units.

5. A system according to anyone of the preceding claims, **characterised in that** said monitoring device sends said data and/or locating information only after an identification procedure by said control station.

6. A system according to claim 5, **characterised in that** said identification procedure comprises the following steps:
- transmission of an access request to get said data and/or locating information by an user by means of said control station;
- reception of said access request by said monitoring device;
- transmission of the identification code to said control station by said monitoring device;
- reception of said identification code by said control station;
- identification of said monitoring device by said control station;
- transmission of the identification information to said monitoring device by said control station;
- starting of the transmission of said data and/or locating information;
- end transmission data message transmission.

7. A system according to anyone of the preceding claims, **characterised in that** said monitoring device, after the end of data transmission, could function as a radio link among said control station and one or more monitoring device and receiving said data and/or locating information from said further one or more monitoring device and forwarding them by transmission to said control station.

8. A system according to claim 7, **characterised in that** said monitoring device transmits said data and/or locating information to said control station by a plurality of control devices functioning as radio link.

9. A system according anyone of the claims 1 - 7, **characterised in that** said monitoring device transmits said data and/or locating information to said control station by means of telephone system.

10. A system according to claim 9, **characterised in that** said monitoring device transmits said data and/or locating information to said control station by means of a cellular phone functioning as a radio link.

11. A system according to anyone of the preceding claims, **characterised in that** said control station comprises an interface for communicating received data to a user.

12. A system according to claim 11, **characterised in that** said at least one interface comprises a monitor.

13. A system according anyone of the claims 11 - 12, **characterised in that** said at least one interface comprises a printer.

14. A system according to anyone of the preceding claims, **characterised in that** said at least one surveying device of the surrounding environment is a videocamera.

15. A system according to claim 14, **characterised in that** said videocamera comprises an electronic device for images acquisition.

16. A system according to anyone of the claims 14 - 15, **characterised in that** said videocamera comprises at least one infra red lighting device for images acquisition without light.

17. A system according to anyone of the claims 14 - 16, **characterised in that** said videocamera comprises at least one video processing unit for images compression.

18. A system according to anyone of the preceding claims, **characterised in that** said at least one surveying device of surrounding environment comprises a microphone.

19. A system according to claim 18, **characterised in that** said monitoring device comprises an audio processing unit and a compression unit.

20. A system according anyone of the claims 14 - 18, **characterised in that**, after the end of data transmission, said monitoring device collects audio and video information of surrounding environment and sends them in real time to said control station for detecting possible human presence alive.

21. A system according to anyone of the preceding claims, **characterised in that** said monitoring device activates said at least one surveying information device of surrounding environment for variation threshold crossing of at least one parameter by said detector device.

22. A system according to claim 21, **characterised in that** said monitoring device activates said at least one surveying information device of surrounding environment for crossing of a plurality of variation thresholds of corresponding parameters detected by said detecting device to avoid false activation.

23. A system according to anyone of the preceding claims, **characterised in that** said at least one detecting device comprises a device to detect radiations.

24. A system according to anyone of the preceding claims, **characterised in that** said at least one detecting device comprises a gas and/or chemical toxic and/or polluting substances sensor.

25. A system according to anyone of the preceding claims, **characterised in that** said at least one detecting device comprises a device to detect the structure collapses.

26. A system according to claim 25, **characterised in that** said at least one detecting device to detect the structures collapse comprises a videocamera.

27. A system according anyone of the claims 25 - 26, **characterised in that** said detecting device to detect the structures collapse comprises at least one processing unit for extracting the structural parameters from video images.

28. A system according to claim 25, **characterised in that** said video images structural parameters are distances among points, lengths of lines and angles among said lines.

29. A system according anyone of the claims 21, 22 and 28, **characterised in that** said variation thresholds of said structural parameters are per cent variations of said distances among points, said lengths of lines and corners among said lines and/or their mutual correlations.

30. A system according anyone of the claims 21 - 29, **characterised in that** said monitoring device activates said at least one surveying information device of surrounding environment by means of an activation procedure, for avoiding false activation, which comprises the following steps:
a. data acquisition from the surrounding environment by the surveying device;
b. extraction of calculation parameters by said central processing unit;
c. processing of said parameters;
d. extraction of said parameters variations and of related mutual relations;
e. comparison of said parameters variations with said maximum predetermined variation threshold;
if at least one maximum variation threshold of said parameters is crossed, then the monitoring device carries out the following steps:
e.1. an activation counter increasing by one;
if the activation counter is lower than a predetermined value, then the monitoring device comes back to step a, else it is carried out the following step:
e.1.1. it is activated the surveying device of surrounding environment;
if the variation threshold is not crossed, then the device carries out the following step:
e.2. the activation counter is set at zero;
e.2.1. the loop starts again at step a.

31. A system according anyone of the claims 26 - 30, **characterised in that** said activation procedure to avoid false activation, comprises the following steps:
a_{V}. images acquisition by the videocamera;
b_{V}. extraction of structural parameters by means of a video processing unit by detecting the luminosity gradients of the surrounding environment and by the selection of the structural set parameters such as points and/or lines and/or angles among lines;
c_{V}. tracking of said structural parameters on the video image;
d_{V}. extraction of said parameters variations;
e_{V}. comparison of said parameters variations with maximum predetermined variation threshold;
e_{V}.1. activation counter increasing by one;
if the activation counter is lower than a predetermined value then the monitoring device comes back to step a, else it is carried out the following step:
eᵥ.1.1. activation of the videocamera to survey images of surrounding environment for surveying information , in particular about the possible danger for humans;
if the variation threshold is not crossed, then the device carries out the following step:
e_{V}.2. the activation counter is set at zero;
e_{V}.2.1. the loop starts again at step a.

32. A system according to anyone of the preceding claims, **characterised in that** said monitoring device comprises a communication gate to insert identification data of said monitoring device.

33. A system according to claim 32, **characterised in that** said communication gate enables only an input data flow.

34. A system according anyone of the claims 32 - 33, **characterised in that** said communication gate can be active one time, remaining then inhibited after the first use.

35. A system according anyone of the claims 32 - 34, **characterised in that** it comprises a procedure for inserting said identification data of said monitoring device comprising the following steps:
A. connecting a programming device to said monitoring device through said communication gate;
B. connecting of electrical feed;
C. installing said monitoring device;
D. extraction of parameters by the monitoring device;
E. selection of said parameters by the installation technician.
F. selection of relations among said parameters by the installation technician.
G. selection of the variation thresholds of said parameters by the installation technician, and inserting locating information;
H. selection of a time interval after which the crossings of said parameters are considered occurred;
I. activation of said monitoring device;
L. interruption of the connection between said communicating gate of said monitoring device and said programming device.

36. A system according to anyone of the preceding claims, **characterised in that** said locating information regard the environment in which the monitoring device is installed.

37. A system according to anyone of the preceding claims, **characterised in that** said electric feeding means comprise the supply mains.

38. A system according to anyone of the preceding claims, **characterised in that** said electric feeding means comprise a buffer battery and the related charger.

39. A system according to anyone of the preceding claims, **characterised in that** said electric feeding means comprise a solar collector.

40. A system according to anyone of the preceding claims, **characterised in that** said electric feeding means comprise an electronic control unit.

41. A system according to anyone of the preceding claims, **characterised in that** said monitoring device is contained in an shock resistant and/or fireproof and/or watertight packaging.
